# EUROPÄISCHE PATENTSCHRIFT

(11) **EP 2 421 663 B1**
(45) Veröffentlichungstag und Bekanntmachung des Hinweises auf die Patenterteilung: **26.09.2012**
(21) Anmeldenummer: 10725066.4
(22) Anmeldetag: 20.05.2010
(51) Int. Cl.: B09B 3/00, C22B 1/16, C22B 7/00, C22B 7/02, C22B 7/04, F23J 1/00, A62D 3/36, A62D 3/40

(54) **VERFAHREN ZUM AUFBEREITEN VON FESTEN VERBRENNUNGSPRODUKTEN VON KOHLE**
METHOD FOR REPROCESSING SOLID COMBUSTION PRODUCTS OF COAL
PROCÉDÉ DE PRÉPARATION DE PRODUITS DE COMBUSTION SOLIDES DU CHARBON

(30) Priorität: 29.06.2009 DE 102009031175
(43) Veröffentlichungstag der Anmeldung: 29.02.2012
(73) Patentinhaber: SOLA NEW TECHNOLOGY GMBH, 82515 Wolfratshausen (DE)
(72) Erfinder: GRZYBOWSKI, Jacek, 59065 Hamm (DE); ARTAMONOV, Veaceslav, Mun Bucaresti Sec. 3 (RO); ARTAMONOV, Dumitru, 59065 Hamm (DE); SCOVITIN, Albert, Chisinau (MD)
(74) Vertreter: Kalkoff & Partner
(86) Internationale Anmeldenummer: PCT/EP2010/056956
(87) Internationale Veröffentlichungsnummer: WO 2011/000631

(56) Entgegenhaltungen:
- EP-A1- 0 829 276
- EP-A2- 0 903 185
- DE-A1- 4 314 775
- US-A- 4 737 356
- US-A- 5 516 974
- US-A1- 2008 078 306

## Beschreibung

Die vorliegende Erfindung betrifft ein Verfahren zum Aufbereiten von festen Verbrennungsprodukten von Kohle insbesondere Steinkohle/Schwarzkohle. Verbrennungsprodukte im Sinne der vorliegenden Erfindung können dabei alle festen Verbrennungsrückstände umfassen, welche bei einer Verbrennung von Kohle bevorzugterweise von Steinkohle/Schwarzkohle entstehen und/oder nach der Verbrennung bevorzugterweise von Steinkohle/Schwarzkohle zurückbleiben können. Verbrennungsprodukte im Sinne der vorliegenden Erfindung entstehen daher gegebenenfalls erst bei und/oder nach einer eigentlichen Verbrennung. Insbesondere können feste Verbrennungsprodukte im Sinne der vorliegenden Erfindung Verbrennungsprodukte von Steinkohle/Schwarzkohle und/oder feste Rückstände einer solchen Verbrennung wie zum Beispiel Aschen, Flugaschen, Schlacken und Stäube umfassen.

Feste Verbrennungsprodukte weisen bekannterweise einen gewissen Gehalt an verschiedenen Elementen/Verbindungen insbesondere zum Beispiel an Alkalimetallen, Erdalkalimetallen, Übergangsmetallen, Metallen, Schwermetallen, Edelmetallen, Halbmetallen, Lanthanoiden und Actinoiden und/oder an entsprechenden Verbindungen dieser Elemente auf.

Insbesondere können Verbrennungsprodukte zum Beispiel Spuren beziehungsweise mehr oder weniger große Anteile an Kupfer, Eisen, Nickel, Silber, Blei, Zink, Zinn, Aluminium, Calcium, Natrium, Silizium, Titan, Gold, Platin, Palladium, Rhodium, Iridium, Indium, Wolfram, Rhenium, Thallium, Niob, Uran und/oder an entsprechenden Verbindungen dieser Elemente aufweisen.

Aus diesem Grund werden Verbrennungsprodukte meist gesammelt und gesondert entsorgt beziehungsweise deponiert, um das Risiko einer eventuellen Abgabe von Schwermetallen oder anderen toxischen Stoffen/Verbindungen zu reduzieren und einer Kontaminierung der Umwelt durch eine besondere Entsorgung beziehungsweise Deponierung entgegenzuwirken.

Dabei sind aus dem Stand der Technik Verfahren bekannt, um Verbrennungsprodukte und die darin enthaltenen Elemente/ Verbindungen möglichst elutionssicher zu binden beziehungsweise einzuschließen. Dabei werden die Verbrennungsprodukte zumeist in eine Bindermatrix eingebracht, welche insbesondere zum Beispiel Silikate und/oder bevorzugt zum Beispiel Glas oder Zement umfassen kann. Es ist dabei die Aufgabe der entsprechenden Verfahren, die in den Verbrennungsprodukten befindlichen Elemente/ Verbindungen möglichst sicher zu binden, sodass toxische Elemente/Verbindungen möglichst nicht entweichen können. Insbesondere soll dabei auch sichergestellt werden, dass selbst beim Kontakt beziehungsweise beim Spülen mit einem geeigneten Lösungsmittel insbesondere zum Beispiel mit einer basischen oder sauren Lösung keine toxischen Elemente/Verbindungen abgegeben werden. Die nach diesen Verfahren hergestellten Stoffe, die eine möglichst inerte Matrix mit elutionssicher eingeschlossenen/eingebrachten toxischen Elementen/ Verbindungen umfassen, können dabei zum Beispiel Deponiert werden und/oder als Gläser und/oder Füllstoffe/Dämmstoffe insbesondere für Bauelemente verwendet werden.

Solche Verfahren werden zum Beispiel in den Offenlegungsschriften DE4435618, EP-A-0930185, EP-A-0829276 oder DE3717085 eingehend beschrieben.

Da es jedoch nur sehr schwer möglich ist, eine vollkommen inerte Matrix zu erhalten, in welcher die toxischen Elemente/ Verbindungen eingeschlossen werden können, und da es zudem zum Beispiel insbesondere bei längerer Lagerung auch zur Migration der toxischen Elemente/ Verbindungen (in der Matrix und aus dieser heraus) sowie zur Korrosion der Matrix kommen kann, ist ein Entweichen der toxischen Elemente/ Verbindungen trotz allem nicht vollkommen auszuschließen.

Daher sind aus dem Stand der Technik ebenfalls Verfahren bekannt, bei denen Verbrennungsprodukte mit sauren Lösungen oder auch mit Lösungen, welche ein Bindemittel/einen Chelatbildner enthalten, ausgewaschen werden, um Schwermetalle aus den Verbrennungsprodukten herauszuziehen. Die dabei erhaltenen Füllstoffe weisen demnach wesentlich niedrigere Konzentrationen an toxischen Elementen/Verbindungen auf, sodass ihre Verwendung wesentlich unproblematischer ist. Die Offenlegungsschrift DE4141889 beschreibt dabei zum Beispiel ein Verfahren, bei dem Asche mit einer Lösung, welche einen Chelatbildner umfasst, ausgewaschen wird, um toxische Schwermetalle aus der Asche zu entfernen. Des Weiteren beschreibt die Offenlegungsschrift DE4318535 ein Verfahren, bei dem saure Lösungen verwendet werden, um toxische Schwermetalle aus der Asche auszuwaschen. Die Konzentration an Schwermetallen in der Asche kann somit erheblich gesenkt werden. Die behandelte Asche kann anschließend unproblematisch zum Beispiel als Füllstoff verwendet werden.

Je nach Zusammensetzung der Verbrennungsprodukte kann es jedoch sehr schwierig werden, die Verbrennungsprodukte durch bloßes Auswaschen ausreichend von toxischen Elementen/Verbindungen zu befreien.

In der Tat können Verbrennungsprodukte je nach Zusammensetzungen und insbesondere zum Beispiel Verbrennungsprodukte und/oder Aschen aus der Verbrennung von Kohle bevorzugterweise aus der Verbrennung Steinkohle/Schwarzkohle zum Beispiel viel Siliziumdioxid und/oder Glas und/oder unlösliche oder nur sehr schwer lösliche Verbindungen insbesondere unlösliche oder nur sehr schwer löslichen Oxide und/oder bevorzugt unlösliche oder nur sehr schwer lösliche Silikate beziehungsweise wasser- und/oder säureunlösliche oder nur schwer wasser- und/oder säurelösliche Silikate insbesondere Silikate und/oder unlösliche oder nur sehr schwer lösliche Verbindungen und/oder Silikate von Alkalimetallen, Erdalkalimetallen, Übergangsmetallen, Metallen, Schwermetallen, Edelmetallen, Halbmetallen, Lanthanoiden und Actinoiden umfassen.

Dadurch können viele der toxischen Elemente/Verbindungen in Siliziumdioxid und/oder in Glas und/oder in unlöslichen oder nur sehr schwer löslichen Verbindungen insbesondere unlöslichen oder nur sehr schwer löslichen Oxiden und/oder bevorzugt in unlöslichen oder nur sehr schwer löslichen Silikaten beziehungsweise in wasser- und/oder säureunlöslichen oder nur schwer wasser- und/oder säurelöslichen Silikaten insbesondere in Silikaten und/oder unlöslichen oder nur sehr schwer löslichen Verbindungen und/oder Silikaten von Alkalimetallen, Erdalkalimetallen, Übergangsmetallen, Metallen, Schwermetallen, Edelmetallen, Halbmetallen, Lanthanoiden und Actinoiden gebunden beziehungsweise eingeschlossen vorliegen. Da die toxischen Elemente/Verbindungen daher in diesem Fall zum Großteil als Einschlüsse vorliegen beziehungsweise in unlöslichen/schwerlöslichen Verbindungen gebunden und/oder eingebracht sind, können Schwermetalle und andere toxische Elemente/Verbindungen gegebenenfalls nur sehr schwer beziehungsweise nur sehr unzureichend durch Auswaschen mit sauren Lösungen oder mit Lösungen, die einen Binder/Chelatbildner umfassen, von Schwermetallen und/oder anderen toxischen Elementen/Verbindungen befreit werden.

Es ist daher die Aufgabe der vorliegenden Erfindung, ein Verfahren zur Aufbereitung der Verbrennungsprodukte bereitzustellen, welches es ermöglicht, Verbrennungsprodukte bevorzugterweise Verbrennungsprodukte von Kohle insbesondere von Steinkohle/Schwarzkohle und/oder weiter bevorzugt Verbrennungsprodukte, welche zum Beispiel Siliziumdioxid und/oder Glas und/oder unlösliche oder nur sehr schwer lösliche Verbindungen insbesondere unlösliche oder nur sehr schwer löslichen Oxide und/oder bevorzugt unlösliche oder nur sehr schwer lösliche Silikate beziehungsweise wasser- und/oder säureunlösliche oder nur schwer wasser- und/oder säurelösliche Silikate insbesondere Silikate und/oder unlösliche oder nur sehr schwer lösliche Verbindungen und/oder Silikate von Alkalimetallen, Erdalkalimetallen, Übergangsmetallen, Metallen, Schwermetallen, Edelmetallen, Halbmetallen, Lanthanoiden und Actinoiden umfassen, so aufzubereiten, dass es möglich wird, diesen Verbrennungsprodukten Metalle insbesondere Schwermetalle und/oder andere toxische Elemente/Verbindungen ausreichend zu entziehen, um eine problemlose weitere Verwendung der Rückstände der Verbrennungsprodukte zu ermöglichen. Bevorzugterweise kann unlöslich und/oder schwer löslich und/oder sehr schwer löslich dabei wasser- beziehungsweise säureunlöslich und/oder nur schwer wasser- beziehungsweise säurelöslich und/oder nur sehr schwer wasserbeziehungsweise säurelöslich bedeuten.

Diese Aufgabe wird dabei durch ein Verfahren zur Aufbereitung der Verbrennungsprodukte mit den Merkmalen des unabhängigen Anspruchs 1 gelöst. Besondere Ausführungsformen oder Weiterbildungen des erfindungsgemäßen Verfahrens finden sich dabei in den Unteransprüchen sowie nachfolgend in der detaillierten Beschreibung des Verfahrens gemäß der vorliegenden Erfindung.

Das erfindungsgemäße Verfahren zur Aufbereitung von Verbrennungsprodukten umfasst dabei, dass die Verbrennungsprodukte zunächst mit einer Base gemischt werden, bevor eine Sinterung des erhaltenen Gemischs erfolgt, wobei das gesinterte Gemisch nach dem Sintern mit einer sauren Lösung ausgewaschen werden kann. Dabei können aufbereitete und ausgewaschene Rückstände der Verbrennungsprodukte sowie eine bevorzugt saure Lösung beziehungsweise Waschlösung von Schwermetallen beziehungsweise von anderen toxischen Elementen/Verbindungen und/oder im Übrigen zum Beispiel von Alkalimetallen, Erdalkalimetallen, Übergangsmetallen, Metallen, Edelmetallen, Halbmetallen, Lanthanoiden und Actinoiden oder entsprechenden Verbindungen dieser Elemente, erhalten werden.

Dadurch lassen sich Schwermetalle und andere toxische Elemente/Verbindung sowie im Übrigen zum Beispiel Alkalimetalle, Erdalkalimetalle, Übergangsmetalle, Metalle, Edelmetalle, Halbmetalle, Lanthanoide und Actinoide oder entsprechende Verbindungen dieser Elemente ausreichend aus den Verbrennungsprodukten entfernen, um die problemlose Weiterverwendung der aufbereiteten Rückstände der Verbrennungsprodukte zu ermöglichen.

Als Base im Sinne der vorliegenden Erfindung können dabei alle Stoffe beziehungsweise Stoffgemische und/oder Verbindungen beziehungsweise Verbindungsgemische angesehen werden, welche in wässriger Lösung in der Lage sind, Hydroxidionen (OH⁻) zu bilden.

Bevorzugterweise werden erfindungsgemäß jedoch mineralische Basen und/oder Alkalien und/oder Basen, welche ein Element aus der Familie der Alkalimetalle und/oder Erdalkalimetalle umfassen, als Base verwendet. Darüber hinaus können gegebenenfalls auch Mischungen zweier oder mehrerer solcher Basen im erfindungsgemäßen Verfahren als Base verwendet werden.

Insbesondere Basen, die Kalium und/oder Natrium umfassen, können dabei erfindungsgemäß weiter bevorzugt verwendet werden.

Durch das Hinzugeben einer Base und insbesondere einer Base, welche mindestens ein Alkalimetall und/oder Erdalkalimetall insbesondere Natrium und/oder Kalium umfasst, können den Verbrennungsrückständen gegebenenfalls Stoffe/Elemente/Verbindungen insbesondere Alkalimetalle und/oder Erdalkalimetalle insbesondere Natrium und/oder Kalium zugefügt werden, sodass beim nachfolgenden Sintern der Mischung der Base und der Verbrennungsprodukte verstärkt beziehungsweise hauptsächlich zum Beispiel wasser- und/oder säurelösliche Verbindungen insbesondere zum Beispiel wasser- und/oder säurelösliche Aluminate und/oder Silikate insbesondere Alkalisilikate, bevorzugt wasser- und/oder säurelösliche Alkalisilikate, zum Beispiel Natrium- oder Kaliumsilikate (NaSiO₃ oder KSiPO₃) gebildet werden können. Insbesondere können demnach auch unlösliche oder nur sehr schwer lösliche Verbindungen und/oder Oxide und/oder Silikate insbesondere wasser- und/oder säureunlösliche oder nur schwer wasser- und/oder säurelösliche Silikate beim Sintern in wasser- und/oder säurelösliche Verbindungen und/oder Oxide und/oder Silikate insbesondere in Alkalisilikate, bevorzugt in wasser- und/oder säurelösliche Alkalisilikate, weiter bevorzugt zum Beispiel Natrium- oder Kaliumsilikate (NaSiO₃ oder KSiO₃), umgewandelt werden.

Bevorzugterweise wird im erfindungsgemäßen Verfahren lediglich eine einzige Base, welche dabei insbesondere zum Beispiel keine Mischung von Basen darstellt, zu den Verbrennungsprodukten zugegeben. Dadurch kann die Handhabung und Lagerung der Base vereinfacht werden. Bevorzugterweise erfolgt die Zugabe einer Base zu den Verbrennungsprodukten im erfindungsgemäßen Verfahren dabei ohne die Zugabe weiterer Salze und/oder Oxide sowie insbesondere ohne die Zugabe von Salz(en) und/oder einem Oxid beziehungsweise alternative mehrerer Oxide, welche(s) im Sinne der vorliegenden Erfindung nicht als Base gelten kann/können. Des Weiteren erfolgt das erfindungsgemäße Verfahren vor und bis zum Sintern, einschließlich des Sinterns bevorzugterweise ohne Zugabe von Wasser und/oder einer Säure und/oder der wässrigen Lösung einer Säure zur Base und/oder zu den Verbrennungsprodukten und/oder zum Gemisch der Verbrennungsprodukte und der Base. Dabei erfolgt die Zugabe der Base bevorzugterweise nicht als Zugabe einer basischen Lösung insbesondere einer wässerigen basischen Lösung. Zudem erfolgt die Zugabe der Base im erfindungsgemäßen Verfahren bevorzugterweise nach der eigentlichen Verbrennung, sodass die Base den Verbrennungsprodukten zugegeben wird. Insbesondere kann dies bedeuten, dass im erfindungsgemäßen Verfahren nach der Zugabe der Base bevorzugterweise keine Verbrennung mehr erfolgt.

Insbesondere können im erfindungsgemäßen Verfahren dabei Hydroxide oder Hydrogensulfite von Alkalimetallen und/oder Erdalkalimetallen erfindungsgemäß als Base verwendet werden. Besonders bevorzugt können dabei ebenfalls Carbonate insbesondere Carbonate von Alkalimetallen und/oder Erdalkalimetallen im erfindungsgemäßen Verfahren als Base verwendet werden. Carbonate können dabei bevorzugt verwendet werden, da Sie es ermöglichen gegebenenfalls Alkalimetalle und/oder Erdalkalimetalle mit einem Minimum an Ruckständen in die Verbrennungsprodukte einzubringen, da beim Sintern gegebenenfalls geringe Mengen an CO₂ einfach entweichen können.

Bevorzugt kann zum Beispiel Natriumhydroxid, Kaliumhydroxid, Natriumhydrogensulfit, Kaliumhydrogensulfit und/oder eine Mischung davon als Base verwendet werden. Besonders bevorzugt kann dabei zum Beispiel auch Natriumcarbonat, Kaliumcarbonat und/oder eine Mischung davon als Base verwendet werden.

Die Base kann dabei bevorzugt zum Beispiel in stöchiometrischer oder überstöchiometrischer Menge im Verhältnis zum Gehalt an Silizium (Si) und/oder an Glas und/oder an Siliziumdioxid (SiO₂) in den Verbrennungsprodukten zugegeben und gegebenenfalls mit den Verbrennungsprodukten vermischt werden, sodass im Gemisch der Verbrennungsprodukte und der Base ein Verhältnis und insbesondere ein stöchiometrisches Verhältnis von Base zu Silizium (Si) und/oder Glas und/oder Siliziumdioxid (SiO₂) bevorzugterweise zum Beispiel größer oder gleich 1, weiter bevorzugt zwischen 1 und 4, weiter bevorzugt zwischen 1,05 und 3, weiter bevorzugt zwischen 1,1 und 2, weiter bevorzugt zwischen 1,15 und 1,5; weiter bevorzugt zwischen 1,2 und 1,4 erreicht werden, wobei ein Verhältnis insbesondere ein stöchiometrisches Verhältnis zwischen 1 und 1,2 und insbesondere 1 und 1,1 besonders bevorzugt werden kann.

Darüber hinaus umfasst das Sintern/die Sinterung gemäß dem erfindungsgemäßen Verfahren zumindest ein teilweises Verschmelzen der Teilchen der Verbrennungsprodukte insbesondere der Verbrennungsprodukte von Kohle bevorzugterweise von Steinkohle/Schwarzkohle und der Teilchen der Base, bevorzugt bei erhöhter Temperatur. Die Begriffe Sintern und Sinterung können dabei synonym verwendet werden.

Dabei kann es insbesondere darauf ankommen, dass die Verbrennungsprodukte insbesondere Verbrennungsprodukte von Kohle bevorzugterweise von Steinkohle/Schwarzkohle und/oder gegebenenfalls deren Inhaltstoffe und die Base beim zumindest teilweisen Verschmelzen der Teilchen der Verbrennungsprodukte und der Teilchen der Base, bevorzugt bei erhöhter Temperatur miteinander reagieren können.

Bevorzugterweise kann die Temperatur beim Sintern dabei zum Beispiel zwischen 100°C und 2000 °C, bevorzugt zwischen 200 °C und 1700 °C, weiter bevorzugt zwischen 300 °C und 1600 °C, weiter bevorzugt zwischen 400 °C und 1500 °C, weiter bevorzugt zwischen 450°C und 1450 °C, weiter bevorzugt zwischen 500 °C und 1400 °C, weiter bevorzugt zwischen 550 °C und 1350 °C, weiter bevorzugt zwischen 600°C und 1300 °C, weiter bevorzugt zwischen 625 °C und 1275 °C, weiter bevorzugt zwischen 650°C und 1250 °C, weiter bevorzugt zwischen 675 °C und 1225 °C, weiter bevorzugt zwischen 700 °C und 1200 °C, weiter bevorzugt zwischen 712,5 °C und 1187,5 °C, weiter bevorzugt zwischen 725 °C und 1175 °C, weiter bevorzugt zwischen 737,5 °C und 1150°C, weiter bevorzugt zwischen 750 °C und 1125 °C, weiter bevorzugt zwischen 762,5 °C und 1100 °C, weiter bevorzugt zwischen 775 °C und 1087,5 °C, weiter bevorzugt zwischen 787,5 °C und 1075 °C, weiter bevorzugt zwischen 800 °C und 1057,5 °C, weiter bevorzugt zwischen 805°C und 1050 °C, weiter bevorzugt zwischen 810 °C und 1037,5 °C, weiter bevorzugt zwischen 815 °C und 1025 °C, weiter bevorzugt zwischen 820 °C und 1012,5 °C, weiter bevorzugt zwischen 825°C und 1000 °C, weiter bevorzugt zwischen 830°C und 990 °C, weiter bevorzugt zwischen 835 °C und 980 °C, weiter bevorzugt zwischen 840 °C und 970°C, weiter bevorzugt zwischen 845 °C und 960 °C, weiter bevorzugt zwischen 850 °C und 950 °C, weiter bevorzugt zwischen 852,5 °C und 940 °C, weiter bevorzugt zwischen 855°C und 930 °C, weiter bevorzugt zwischen 857,5 °C und 915 °C, weiter bevorzugt zwischen 860°C und 900 °C, weiter bevorzugt zwischen 865 °C und 895°C, weiter bevorzugt zwischen 870 °C und 890 °C liegen.

Das Sintern kann dabei insbesondere zum Beispiel während einer Dauer von 0,1 Stunden bis 4 Stunden, bevorzugt von 0,2 Stunden bis 3 Stunden, weiter bevorzugt von 0,25 Stunden bis 2 Stunden, weiter bevorzugt von 0,5 Stunden bis 2 Stunden erfolgen.

Nach dem Sintern kann das gesinterte Gemisch aus Verbrennungsprodukten und der Base dann mit einer sauren Lösung ausgewaschen werden.

Dadurch können Schwermetalle und andere toxische Elemente/Verbindungen sowie im Übrigen zum Beispiel auch Alkalimetalle, Erdalkalimetalle, Übergangsmetalle, Metalle, Edelmetalle, Halbmetalle, Lanthanoide und Actinoide oder entsprechende Verbindungen dieser Elemente aus dem gesinterten Gemisch herausgewaschen werden. Bevorzugterweise können dabei gemäß dem erfindungemäßen Verfahren insbesondere Schwermetalle und bevorzugt auch Edelmetalle und/oder Übergangsmetalle ausgewaschen und in die Waschlösung überführt werden.

Bevorzugterweise kann als saure Lösung, welche zum Auswaschen verwendet wird, im Sinne der vorliegenden Erfindung insbesondere zum Beispiel eine Mineralsäure insbesondere Salpetersäure, Salzsäure oder Chlorsäure beziehungsweise eine entsprechende Lösung insbesondere eine wässerige Lösung einer dieser Säuren verwendet werden. Darüber hinaus können gegebenenfalls auch Mischungen zweier oder mehrerer dieser Säuren beziehungsweise entsprechende Lösungen verwendet werden. Diese Säuren können dabei bevorzugterweise zumeist wasser- oder säurelösliche Komplexe von toxischen Elementen/Verbindungen, insbesondere von Alkalimetallen, Erdalkalimetallen, Übergangsmetallen, Metallen, Schwermetallen, Edelmetallen, Halbmetallen, Lanthanoiden und Actinoiden bilden, sodass diese gegebenenfalls gelöst und in eine wässerige Phase/Lösung überführt werden können.

Besonders bevorzugt kann dabei Salzsäure beziehungsweise eine Salzsäurelösung verwendet werden. Diese kann relativ problemlos erwärmt und zudem in einem gegebenenfalls geschlossenen Kreislauf gegebenenfalls recycelt sowie wieder verwendet werden. Bevorzugterweise kann dabei als saure Lösung, eine Lösung verwendet werden, welche nur eine einzige Säure umfasst, sodass insbesondere keine Lösung verwendet wird, die eine Mischung von zwei oder mehreren Säuren umfasst. Dadurch kann gegebenenfalls die Handhabung der sauren Lösung sowie deren Aufbereitung und Recycling vereinfacht werden.

Beispielsweise kann eine 10 bis 75-prozentige, bevorzugt 15 bis 60-prozentige, weiter 20 bis 45-prozentige bevorzugt wässerige Säurelösung zum Auswaschen des gesinterten Gemischs der Verbrennungsprodukte und der Base verwendet werden. Besonders bevorzugt sind dabei zum Beispiel 10 bis 30-prozentige und weiter bevorzugt 10 bis 25-prozentige Säurelösungen beziehungsweise bevorzugt wässerige Säurelösungen.

Insbesondere kann zum Beispiel eine 10 bis 20-prozentige Salzsäurelösung bevorzugterweise eine 10 bis 20-prozentige wässerige Salzsäurelösung zum Auswaschen des gesinterten Gemischs der Verbrennungsprodukte und der Base verwendet werden.

Mit einer sauren Lösung auswaschen kann dabei im Sinne der vorliegenden Erfindung zum Beispiel bedeuten, dass eine saure Lösung einfach zum gesinterten Gemisch der Verbrennungsprodukte und der Base zugegeben wird, wobei anschließend und/oder gleichzeitig eine Trennung der Lösung beziehungsweise der Waschlösung und der ausgewaschenen Rückstände des gesinterten Gemisches der Verbrennungsprodukte und der Base durch geeignete Mittel und insbesondere zum Beispiel durch Filtration erfolgen kann. Dabei kann eine saure Lösung beispielweise solange zum Auswaschen zum gesinterten Gemisch der Verbrennungsprodukte und der Base zugegeben werden, bis toxische Elemente/Verbindungen und darüber hinaus zum Beispiel auch Alkalimetalle, Erdalkalimetalle, Übergangsmetalle, Metalle, Schwermetalle, Edelmetalle, Halbmetalle, Lanthanoide und Actinoide oder entsprechende Verbindungen dieser Elemente ausreichend aus dem gesinterten Gemisch der Verbrennungsprodukte und der Base entfernt wurde, um die problemlose Weiterverwendung der ausgewaschenen Rückstände aus dem gesinterten Gemisch der Verbrennungsprodukte und der Base nach dem Auswaschen zu erlauben.

In einer weiteren Ausführungsform des erfindungsgemäßen Verfahrens kann zum Auswaschen eine saure Lösung beziehungsweise die darin enthaltene Säure bevorzugt zum Beispiel in stöchiometrischer oder überstöchiometrischer Menge im Verhältnis zum Gehalt an Oxiden und/oder insbesondere an den Oxiden, die die Hauptbestandteile der Verbrennungsprodukte darstellen, und/oder an Silizium (Si) und/oder an Glas und/oder an Siliziumdioxid (SiO₂) und/oder an Aluminium (Al) und/oder an Aluminiumoxid (Al₂O₃) und/oder an Natrium (Na) und/oder an Natriumoxid (Na₂O), in den Verbrennungsprodukten und/oder bevorzugterweise im gesinterten Gemisch der Verbrennungsprodukte und der Base verwendet beziehungsweise zum gesinterten Gemisch der Verbrennungsprodukte und der Base zugegeben werden. In der somit erhaltenen Mischung aus der sauren Lösung und dem gesinterten Gemisch der Verbrennungsprodukte und der Base kann demnach ein Verhältnis, insbesondere ein stöchiometrisches Verhältnis von Säure zu Oxiden und/oder insbesondere zu den Oxiden, die die Hauptbestandteile der Verbrennungsprodukte darstellen, und/oder zu Silizium (Si) und/oder zu Glas und/oder zu Siliziumdioxid (SiO₂) und/oder zu Aluminium (Al) und/oder zu Aluminiumoxid (Al₂O₃) und/oder an Natrium (Na) und/oder an Natriumoxid (Na₂O) bevorzugterweise zum Beispiel größer oder gleich 1, weiter bevorzugt zwischen 1 und 4, weiter bevorzugt zwischen 1,05 und 3, weiter bevorzugt zwischen 1,1 und 2, weiter bevorzugt zwischen 1,15 und 1,5; weiter bevorzugt zwischen 1,2 und 1,4 erreicht werden, wobei ein Verhältnis insbesondere ein stöchiometrisches Verhältnis zwischen 1,1 und 1,35 besonders bevorzugt werden kann.

In einer weiteren Ausführungsform des erfindungsgemäßen Verfahrens kann die saure Lösung zum Auswaschen zunächst bevorzugt bei Raumtemperatur zum gesinterten Gemisch der Verbrennungsprodukte und der Base zugegeben und bevorzugterweise damit vermischt beziehungsweise verrührt werden, bevor gegebenenfalls eine Trennung der Waschlösung und der ausgewaschenen Rückstände des gesinterten Gemischs der Verbrennungsprodukte und der Base zum Beispiel durch Filtration erfolgt.

In einer weiteren Ausführungsform des erfindungsgemäßen Verfahrens kann die saure Lösung zum Auswaschen zunächst bevorzugt bei Raumtemperatur zum gesinterten Gemisch der Verbrennungsprodukte und der Base zugegeben und bevorzugterweise damit vermischt beziehungsweise verrührt werden, wobei anschließend gegebenenfalls eine Erwärmung der Mischung aus der sauren Lösung und dem gesinterten Gemisch der Verbrennungsprodukte und der Base bevorzugt noch vor einer Trennung der Waschlösung und der ausgewaschenen Rückstände des gesinterten Gemischs der Verbrennungsprodukte und der Base zum Beispiel durch Filtration erfolgen kann.

Die Erwärmung kann dabei insbesondere zum Beispiel bei einer Temperatur zwischen 25° C und 300° C, bevorzugt zwischen 50°C und 200°C, weiter bevorzugt zwischen 75 °C und 150°C, weiter bevorzugt zwischen 90°C und 125°C, besonders bevorzugt zwischen 25 °C und 90 °C erfolgen. Dabei kann die Erwärmung bevorzugterweise so und/oder insbesondere so lange erfolgen, dass sich dabei ein Gel bildet. Die Bildung eines Gels kann dabei ein besonders effektives Auswaschen der toxischen Elemente/Verbindungen und darüber hinaus zum Beispiel auch der Alkalimetalle, Erdalkalimetalle, Übergangsmetalle, Metalle, Schwermetalle, Edelmetalle, Halbmetalle, Lanthanoide und Actinoide oder entsprechende Verbindungen dieser Elemente aus dem Gel ermöglichen. Bevorzugterweise kann die Bildung eines Gels dabei ein ganz besonders effektives Auswaschen von Schwermetallen und/oder insbesondere von Edelmetallen und/oder von Übergangsmetallen aus dem Gel ermöglichen, wobei eine effektive Überführung der Schwermetalle und/oder insbesondere der Edelmetallen und/oder der Übergangsmetallen in die Waschlösung erfolgen kann. Die Dauer der Erwärmung kann dabei insbesondere zum Beispiel zwischen 0,1 Stunden bis 24 Stunden, bevorzugt zwischen 0,25 Stunden bis 20 Stunden, weiter bevorzugt zwischen 0,3 Stunden bis 15 Stunden, weiter bevorzugt zwischen 0,5 Stunden bis 12 Stunden, weiter bevorzugt zwischen 0,75 Stunden und 10 Stunden, weiter bevorzugt zwischen 0,9 Stunden und 7,5 Stunden, weiter bevorzugt zwischen 1 Stunde und 5 Stunden, weiter bevorzugt zwischen 1,25 Stunden und 3 Stunden, weiter bevorzugt zwischen 1,5 Stunden und 2 Stunden betragen. Nach der Bildung des Gels kann der eventuell noch vorhandene Teil der Waschlösung dann zum Abschließen des Auswaschens vom Gel zum Beispiel durch Filtration getrennt werden.

In einer weiteren Ausführungsform des erfindungsgemäßen Verfahrens kann das gegebenenfalls beim Auswaschen durch eine Erwärmung gebildete Gel, welches als ausgewaschener Rückstand des gesinterten Gemischs der Verbrennungsprodukte und der Base angesehen werden kann, nach der Trennung (welche zum Beispiel durch Filtration erfolgen kann) von einem eventuell noch vorhandenen Teil der Waschlösung und damit nach dem Auswaschen getrocknet werden. Die Trocknung kann dabei zum Beispiel bei einer Temperatur zwischen 20 °C und 500°C, weiter bevorzugt zwischen 40 °C und 400 °C, weiter bevorzugt zwischen 50°C und 300 °C, weiter bevorzugt zwischen 60°C und 250 °C, weiter bevorzugt zwischen 70°C und 200 °C, weiter bevorzugt zwischen 80°C und 150°C, weiter bevorzugt zwischen 90 °C und 125 °C, besonders bevorzugt zwischen 25 °C und 70 °C und/oder unter Vakuum erfolgen.. Die Dauer der Trocknung kann dabei insbesondere zum Beispiel 0,25 Stunden bis 4 Stunden, bevorzugt 0,5 Stunden bis 3 Stunden, weiter bevorzugt 1 Stunden bis 2 Stunden betragen.

In einer weiteren Ausführungsform des erfindungsgemäßen Verfahrens kann das Gel oder das getrocknete Gel, sofern eine Trocknung des Gels erfolgt ist, in einem oder mehreren Schritten zermahlen werden. Dies kann analog zum Zermahlen des gesinterten Gemischs der Verbrennungsprodukte und der Base erfolgen. Bevorzugt kann dabei zum Beispiel ein Granulat/Pulver mit einer durchschnittlichen Korngröße von 0,001 mm bis 50 mm, bevorzugt von 0,01 mm bis 45 mm, weiter bevorzugt von 0,1 mm bis 40 mm, weiter bevorzugt 0,1 mm bis 35 mm, weiter bevorzugt 0,1 mm bis 30 mm weiter bevorzugt 0,1 mm bis 1 mm erhalten werden.

In einer weiteren Ausführungsform des erfindungsgemäßen Verfahrens kann das Gel oder das getrocknete Gel, sofern eine Trocknung des Gels erfolgt ist, welches zudem gegebenenfalls zermahlen wurde, mit einer sauren Lösung in einem und/oder in mehreren Schritten weiter ausgewaschen werden bevor einer Trennung der Waschlösung und der ausgewaschenen Rückstände erfolgt. Das Auswaschen des Gels oder des getrockneten Gels (sofern eine Trocknung des Gels erfolgt ist), welches zudem gegebenenfalls zermahlen wurde, kann dabei insbesondere zusätzlich zum Auswaschen des gesinterten und gegebenenfalls ebenfalls zermahlenen Gemischs der Verbrennungsprodukte und der Base, bei dem sich das Gel gegebenenfalls bilden kann, erfolgen. Das erfindungsgemäße Verfahren kann demnach mindestens zwei Auswaschschritte umfassen, bei denen saure Lösungen zum Auswaschen verwendet werden. In einem ersten Auswaschschritt kann dabei gegebenenfalls ein Auswaschen des Gemischs der Verbrennungsprodukte und der Base erfolgen, wobei gegebenenfalls ein Gel gebildet werden kann. In einem zweiten Auswaschschritt kann dann ein Auswaschen des Gels oder des getrockneten Gels (sofern eine Trocknung des Gels erfolgt ist) erfolgen, welches zudem gegebenenfalls zermahlen wurde. Dabei kann als saure Lösung zum Auswaschen des Gels oder des getrockneten Gels (sofern eine Trocknung des Gels erfolgt ist), welches zudem gegebenenfalls zermahlen wurde, zum Beispiel ebenfalls eine Mineralsäure insbesondere Salpetersäure, Salzsäure oder Chlorsäure beziehungsweise eine entsprechende Lösung insbesondere eine wässerige Lösung einer dieser Säuren, verwendet werden. Auch eine Mischung zweier oder mehrerer dieser Säuren oder eine entsprechende Lösung kann dabei verwendet werden. Bevorzugterweise kann dabei als saure Lösung jedoch eine Lösung verwendet werden, welche nur eine einzige Säure umfasst, sodass insbesondere keine Lösung verwendet wird, die eine Mischung von zwei oder mehreren Säuren umfasst. Dadurch kann gegebenenfalls die Handhabung der sauren Lösung sowie deren Aufbereitung und Recycling vereinfacht werden.

Besonders bevorzugt kann dabei Salzsäure beziehungsweise bevorzugt wässerige eine Salzsäurelösung verwendet werden. Diese kann relativ problemlos erwärmt und zudem gegebenenfalls in einem bevorzugt geschlossenen Kreislauf recycelt und wieder verwendet werden. Durch ein entsprechendes Recycling sowie durch die Aufbereitung der Salzsäure beziehungsweise der Salzsäurelösungen lässt sich Salzsäure dabei wiederverwenden, um die tatsächlich durch das Verfahren verbrauchte Menge an Salzsäure erheblich zu reduzieren. Darüber hinaus kann bevorzugterweise während des gesamten Verfahrens die gleiche Säure beziehungsweise eine Lösung der gleichen Säure zum Auswaschen verwendet werden. Dadurch kann verhindert werden, dass mehrere unterschiedliche Säuren gelagert, gehandhabt und entsorgt beziehungsweise aufbereitet werden müssen.

Beispielsweise kann eine 1 bis 12,5-prozentige, bevorzugt 2 bis 10-prozentige, weiter bevorzugt eine 3 bis 7,5-prozentige, weiter bevorzugt 3,5 bis 6-prozentige, weiter bevorzugt 4 bis 5-prozentige bevorzugt wässerige Säurelösung zum Auswaschen des Gels oder des getrockneten Gels (sofern eine Trocknung des Gels erfolgt ist), welches zudem gegebenenfalls zermahlen wurde, verwendet werden.

Insbesondere kann zum Beispiel eine ungefähr 5-prozentige Salzsäurelösung insbesondere eine 5-prozentige wässerige Salzsäurelösung zum Auswaschen des Gels oder des getrockneten Gels (sofern eine Trocknung erfolgt ist), welches zudem gegebenenfalls zermahlen wurde, verwendet werden.

Sofern das Gel oder das getrocknete Gel (sofern eine Trocknung erfolgt ist) dabei vor dem Auswaschen zermahlen wurde, kann das Auswaschen effizienter erfolgen, sodass toxische Elemente/Verbindungen und darüber hinaus zum Beispiel auch Alkalimetalle, Erdalkalimetalle, Übergangsmetalle, Metalle, Schwermetalle, Edelmetalle, Halbmetalle, Lanthanoide und Actinoide oder entsprechende Verbindungen dieser Elemente, gegebenenfalls sehr effektiv aus dem Gel oder dem getrockneten Gel entfernt werden können.

In einer weiteren Ausführungsform des erfindungsgemäßen Verfahrens kann das Auswaschen des Gels oder des getrockneten Gels (sofern eine Trocknung erfolgt ist), welches zudem gegebenenfalls zermahlen wurde, in mehreren Schritten und/oder durch mehrere Portionen einer sauren Lösung erfolgen. Insbesondere kann das Auswaschen des Gels oder des getrockneten Gels (sofern eine Trocknung erfolgt ist), welches zudem gegebenenfalls zermahlen wurde, dabei zum Beispiel durch mindestens 2, bevorzugt zwischen 3 und 10, weiter bevorzugt zwischen 4 und 6 Portionen einer sauren Lösung ausgewaschen beziehungsweise wiederholt ausgewaschen werden. Dabei können die Waschlösung und die ausgewaschenen Rückstände jeweils nach jeder Portion beziehungsweise nach jedem Auswaschen getrennt werden (zum Beispiel durch Filtration). Durch ein wiederholtes Auswaschen des Gels oder des getrockneten Gels, welches gegebenenfalls auch zermahlen sein kann, können toxische Elemente/Verbindungen und darüber hinaus zum Beispiel auch Alkalimetalle, Erdalkalimetalle, Übergangsmetalle, Metalle, Schwermetalle, Edelmetalle Halbmetalle, Lanthanoide und Actinoide oder entsprechende Verbindungen dieser Elemente gegebenenfalls besonders effektiv aus dem Gel oder dem getrockneten Gel entfernt werden.

Bei jedem Auswaschen im Sinne der Erfindung erfolgt dabei bevorzugterweise eine Trennung der Waschlösung und der jeweils ausgewaschenen Rückstände. Diese Trennung kann dabei zum Beispiel durch Filtration, durch Zentrifugation und/oder durch bloßes Absetzen der ausgewaschenen Rückstände erfolgen. Die Waschlösung kann dabei insbesondere eine wässerige Lösung sein, welche die zum Auswaschen verwendete Säure sowie die toxischen Elemente/Verbindungen und/oder die ausgewaschenen Alkalimetalle, Erdalkalimetalle, Übergangsmetalle, Metalle, Schwermetalle, Edelmetalle Halbmetalle, Lanthanoide und Actinoide oder die entsprechenden Verbindungen dieser Elemente umfasst, die aus dem Gemisch der Verbrennungsprodukte und der Base und/oder aus dem Gel (getrocknet oder ungetrocknet sowie zermahlen oder nicht zermahlen) und/oder aus den bereits ausgewaschenen Rückständen ausgewaschen wurden. Die ausgewaschenen Rückstände können dabei die bevorzugt unlösliche und/oder nur schwer lösliche insbesondere wasserunlösliche und/oder nur schwer wasserlösliche Rückstände darstellten, welche nach dem Auswaschen insbesondere nach dem Auswaschen des gesinterten Gemischs der Verbrennungsprodukte und der Base und/oder nach dem Auswaschen des Gels (getrocknet oder ungetrocknet sowie zermahlen oder nicht zermahlen) und/oder nach dem Auswaschen der bereits ausgewaschenen Rückstände zurückbleiben.

In einer weiteren Ausführungsform der vorliegenden Erfindung können die ausgewaschenen Rückstände optional getrocknet und dann ausgeglüht werden. Die optionale Trocknung kann dabei zum Beispiel bei einer Temperatur zwischen 25 °C und 500 °C, weiter bevorzugt zwischen 40 °C und 400°C, weiter bevorzugt zwischen 50 °C und 300 °C, weiter bevorzugt zwischen 60 °C und 250 °C, weiter bevorzugt zwischen 70 °C und 200 °C, weiter bevorzugt zwischen 80 °C und 150 °C, weiter bevorzugt zwischen 90 °C und 125 °C, besonders bevorzugt zwischen 100 °C und 110 °C und/oder unter Vakuum erfolgen. Die Dauer der optionalen Trocknung kann dabei insbesondere zum Beispiel 0,25 Stunden bis 4 Stunden, bevorzugt 0,5 bis 3 Stunden, weiter bevorzugt 1 bis 2 Stunden, betragen. Zudem kann das Ausglühen zum Beispiel bei einer Temperatur zwischen 250 °C und 3000 °C, bevorzugt zwischen 500 °C und 2500 °C, weiter bevorzugt zwischen 750 °C und 2000 °C, weiter bevorzugt zwischen 900 °C und 1500 °C, weiter bevorzugt zwischen 1000 °C und 1200 °C erfolgen. Die Dauer des Ausglühens kann dabei zum Beispiel zwischen 0,25 Stunden und 10 Stunden, weiter bevorzugt zwischen 0,5 Stunden und 7,5 Stunden, weiter bevorzugt zwischen 0,75 Stunden und 5 Stunden, weiter bevorzugt zwischen 1 Stunde und 3 Stunden, weiter bevorzugt zwischen 1,5 Stunden und 2 Stunden, betragen. Dabei kann aus den Rückständen Siliziumdioxid gewonnen werden.

Die Waschlösung kann dabei insbesondere eine wässerige Lösung sein, oder eine 0,2 bis 0,5- prozentige bevorzugt wässerige Salzsäurelösung, mit einer welche die zum Auswaschen verwendete Säure sowie die ausgewaschenen toxischen Elemente/Verbindungen und/oder die ausgewaschenen Alkalimetalle, Erdalkalimetalle, Übergangsmetalle, Metalle, Schwermetalle, Edelmetalle, Halbmetalle, Lanthanoide und Actinoide oder entsprechende Verbindungen dieser Elemente umfasst. Die Waschlösung kann zudem aufbereitet werden, um die darin gelösten Stoffe zu binden, abzuscheiden und/oder wiederzuverwerten. Insbesondere die in der Waschlösung gegebenenfalls gelösten Alkalimetalle, Erdalkalimetalle, Übergangsmetalle, Metalle, Schwermetalle, Edelmetalle Halbmetalle, Lanthanoide und Actinoide können dabei zum Beispiel durch ein Elektrolyseverfahren und/oder durch Fällung bevorzugt getrennt abgeschieden und/oder der Weiterverarbeitung/Wiederverwertung zugeführt werden. Insbesondere können im erfindungsgemäßen Verfahren dabei zum Beispiel Schwermetalle und/oder Edelmetalle und/oder Übergangsmetalle durch ein Elektrolyseverfahren und/oder durch Fällung bevorzugt getrennt abgeschieden und/oder der Weiterverarbeitung/Wiederverwertung zugeführt werden.

In einer weiteren Ausführungsform des erfindungsgemäßen Verfahrens kann/können die Base und/oder die Verbrennungsprodukte zudem jeweils getrocknet werden, bevor die Base zu den Verbrennungsprodukten zugegeben wird. Bevorzugterweise kann die Trocknung dabei zum Beispiel bei einer Temperatur größer oder gleich 50 °C, bevorzugt größer oder gleich 100°C, weiter bevorzugt bei einer Temperatur zwischen 110 °C und 400 °C, weiter bevorzugt bei einer Temperatur zwischen 120 °C und 300 °C, weiter bevorzugt bei einer Temperatur zwischen 150 °C und 200 °C und/oder unter Vakuum erfolgen. Die Dauer der Trocknung kann dabei insbesondere zum Beispiel 0,1 Stunden bis 4 Stunden, bevorzugt 0,25 Stunden bis 3,5 Stunden, weiter bevorzugt 0,5 Stunden bis 3 Stunden, weiter bevorzugt 1 Stunde bis 2 Stunden, betragen. Weiter bevorzugt kann die Trocknung der Base zum Beispiel insbesondere 1 Stunde bis 2 Stunden bei 200 °C erfolgen.

Darüber hinaus kann in einer weiteren Ausführungsform des erfindungsgemäßen Verfahrens eine Trocknung des Gemischs der Verbrennungsprodukte und der Base vor dem Sintern erfolgen. Bevorzugterweise kann die Trocknung dabei zum Beispiel bei einer Temperatur größer oder gleich 50 °C, bevorzugt größer oder gleich 100 °C, weiter bevorzugt bei einer Temperatur zwischen 110 °C und 400 °C, weiter bevorzugt bei einer Temperatur zwischen 120 °C und 300 °C, weiter bevorzugt bei einer Temperatur zwischen 150°C und 200 °C und/oder unter Vakuum erfolgen. Die Dauer der Trocknung kann dabei insbesondere zum Beispiel 0,1 Sunden bis 4 Stunden, bevorzugt 0,25 Stunden bis 3,5 Stunden, weiter bevorzugt 0,5 Stunden bis 3 Stunden, weiter bevorzugt 1 Stunde bis 2 Stunden betragen. Weiter bevorzugt kann die Trocknung des Gemischs der Verbrennungsprodukte und der Base zum Beispiel insbesondere 1 Stunde bis 2 Stunden bei 200 °C erfolgen.

In einer weiteren Ausführungsform des erfindungsgemäßen Verfahrens kann das gesinterte Gemisch der Verbrennungsprodukte und der Base (welches nach dem Sintern erhalten wird) vor dem Auswaschen mit einer Säurelösung in einem und/oder in mehreren Schritten zermahlen werden. Bevorzugt kann dabei zum Beispiel ein Granulat/Pulver mit einer durchschnittlichen Korngröße von 0,001 mm bis 50 mm, bevorzugt von 0,01 mm bis 45 mm, weiter bevorzugt von 0,1 mm bis 40 mm, weiter bevorzugt 1 mm bis 35 mm, weiter bevorzugt 5 mm bis 30 mm weiter bevorzugt 0,1 mm bis 1 mm erhalten werden. Dabei wird durch ein Zermahlen des gesinterten Gemischs der Verbrennungsprodukte und der Base ein effektiveres und besseres Auswaschen mit einer Säurelösung ermöglicht, da durch das Zermahlen der Kontakt zwischen der Säurelösung und dem gesinterten Gemisch der Verbrennungsprodukte und der Base verbessert werden kann. Dabei ist die Kontaktfläche zwischen dem gesinterten Gemisch der Verbrennungsprodukte und der Base und der Säurelösung nach dem Zermahlen wesentlich größer, sodass das zermahlene gesinterte Gemisch der Verbrennungsprodukte und der Base von der Säurelösung besser umspült und somit effektiver ausgewaschen wird. Dadurch ist es möglich, insbesondere toxische Elemente/Verbindungen und darüber hinaus zum Beispiel auch Alkalimetalle, Erdalkalimetalle, Übergangsmetalle, Metalle, Schwermetalle, Edelmetalle Halbmetalle, Lanthanoide und Actinoide oder entsprechende Verbindungen dieser Elemente gegebenenfalls sehr effektiv aus den Verbrennungsprodukten zu entfernen.

In einer weiteren besonderen Ausführungsform des erfindungsgemäßen Verfahrens kann das Zermahlen des gesinterten Gemischs der Verbrennungsprodukte und der Base auch in mehreren Schritten erfolgen. Insbesondere kann das gesinterte Gemisch der Verbrennungsprodukte und der Base zunächst in einem ersten Schritt nur grob zermahlen werden, um beispielsweise ein Granulat/Pulver mit einer durchschnittlichen Korngröße von 30 mm bis 50 mm, bevorzugt von 25 mm bis 40 mm, weiter bevorzugt 20 mm bis 30 mm, besonders bevorzugt 0,1 mm bis 1 mm zu erhalten. In einem zweiten und/oder in mehreren weiteren Schritt(en) kann das bereits im ersten Schritt grob zermahlene gesinterte Gemisch der Verbrennungsprodukte und der Base nochmals zermahlen werden, um zum Beispiel ein Granulat/Pulver mit einer durchschnittlichen Korngröße von 0,001 mm bis 10 mm, bevorzugt von 0,01 mm bis 5 mm, besonders bevorzugt 0,1 mm bis 1 mm zu erhalten. Dabei können insbesondere toxische Elemente/Verbindungen und darüber hinaus zum Beispiel auch Alkalimetalle, Erdalkalimetalle, Übergangsmetalle, Metalle, Schwermetalle, Edelmetalle Halbmetalle, Lanthanoide und Actinoide oder entsprechende Verbindungen dieser Elemente umso besser aus dem gesinterten Gemisch der Verbrennungsprodukte der Base ausgewaschen werden, je kleiner das gesinterte Gemisch der Verbrennungsprodukte und der Base zermahlen wird.

## Patentansprüche

1. Verfahren zum Aufbereiten von festen Verbrennungsprodukten von Kohle,
**dadurch gekennzeichnet,**
**dass** die Verbrennungsprodukte zunächst mit einer Base gemischt werden, bevor eine Sinterung des erhaltenen Gemisches erfolgt, wobei das gesinterte Gemisch nach dem Sintern mit einer sauren Lösung ausgewaschen wird, wobei eine mineralische Base oder eine Base, welche ein Element aus der Familie der Alkalimetalle und/oder Erdalkalimetalle umfasst, als Base verwendet wird, insbesondere die verwendete Base Kalium und/oder Natrium ist, wobei Hydroxide oder Hydrogensulfite oder Carbonate von Alkalimetallen und/oder Erdalkalimetallen als Base verwendet werden und wobei als saure Lösung eine Mineralsäure insbesondere Salpetersäure, Salzsäure oder Chlorsäure (HClO₃) beziehungsweise eine wässerige Lösung einer dieser Säuren, verwendet wird.

2. Verfahren zum Aufbereiten von Verbrennungsprodukten nach Anspruch1,
**dadurch gekennzeichnet,**
**dass** eine Base in stöchiometrischer oder überstöchiometrischer Menge im Verhältnis zum Gehalt an Silizium (Si) und/oder an Siliziumdioxid (SiO₂) in den Verbrennungsprodukten zugegeben wird, wobei ein Verhältnis und insbesondere ein stöchiometrisches Verhältnis von Base zu Silizium (Si) und/oder Siliziumdioxid (SiO₂) größer oder gleich 1 verwendet wird.

3. Verfahren zum Aufbereiten von Verbrennungsprodukten nach Anspruch 1 oder 2,
**dadurch gekennzeichnet,**
**dass** das die Sinterung bei einer Temperatur von 100 °C bis 2000 °C während einer Dauer von 0,1 Stunden bis 4 Stunden erfolgt.

4. Verfahren zum Aufbereiten von Verbrennungsprodukten nach einem oder mehreren der Ansprüche 1 bis 3,
**dadurch gekennzeichnet,**
**dass** die saure Lösung zum Auswaschen zum gesinterten Gemisch der Verbrennungsprodukte und der Base zugegeben wird, wobei anschließend oder gleichzeitig eine Trennung der Waschlösung und der ausgewaschenen Rückstände des gesinterten Gemischs der Verbrennungsprodukte und der Base durch Filtration erfolgt.

5. Verfahren zum Aufbereiten von Verbrennungsprodukten nach einem oder mehreren der Ansprüche 1 bis 4,
**dadurch gekennzeichnet,**
**dass** zum Auswaschen eine saure Lösung beziehungsweise die darin enthaltene Säure in stöchiometrischer oder überstöchiometrischer Menge im Verhältnis zum Gehalt an Oxiden und/oder insbesondere an den Oxiden, die die Hauptbestandteile der Verbrennungsprodukte darstellen, und/oder an Silizium (Si) und/oder an Siliziumdioxid (SiO₂) und/oder an Aluminium (Al) und/oder an Aluminiumoxid (Al₂O₃) und/oder an Natrium (Na) und/oder an Natriumoxid (Na₂O) in den Verbrennungsprodukten zugegeben wird, wobei ein Verhältnis insbesondere ein stöchiometrisches Verhältnis von Säure zu Oxiden und/oder insbesondere zu den Oxiden, die die Hauptbestandteile der Verbrennungsprodukte darstellen, und/oder zu Silizium (Si) und/oder zu Siliziumdioxid (SiO₂) und/oder zu Aluminium (Al) und/oder zu Aluminiumoxid (Al₂O₃) und/oder an Natrium (Na) und/oder an Natriumoxid (Na₂O) vom größer oder gleich 1 verwendet wird.

6. Verfahren zum Aufbereiten von Verbrennungsprodukten nach einem oder mehreren der Ansprüche 1 bis 5,
**dadurch gekennzeichnet,**
**dass** die saure Lösung zum Auswaschen zunächst bei Raumtemperatur zum gesinterten Gemisch der Verbrennungsprodukte und der Base zugegeben wird, wobei anschließend eine Erwärmung der Mischung aus der sauren Lösung und dem gesinterten Gemisch der Verbrennungsprodukte und der Base bei einer Temperatur zwischen 25° C und 300° C noch vor einer Trennung der Waschlösung und der ausgewaschenen Rückstände des gesinterten Gemischs der Verbrennungsprodukte und der Base durch Filtration erfolgt.

7. Verfahren zum Aufbereiten von Verbrennungsprodukten nach Anspruch 6, **dadurch gekennzeichnet, dass** sich ein Gel bildet.

8. Verfahren zum Aufbereiten von Verbrennungsprodukten nach einem oder beiden der Ansprüche 6 und 7,
**dadurch gekennzeichnet,**
**dass** das beim Auswaschen gebildete Gel, welches als ausgewaschener Rückstand des gesinterten Gemischs der Verbrennungsprodukte und der Base angesehen werden kann, nach der Trennung von einem eventuell noch vorhandenen Teil der Waschlösung, bei einer Temperatur zwischen 20 °C und 500 °C getrocknet wird.

9. Verfahren zum Aufbereiten von Verbrennungsprodukten nach einem oder beiden der Ansprüche 7 und 8,
**dadurch gekennzeichnet,**
**dass** das Gel oder das getrocknete Gel, sofern eine Trocknung des Gels erfolgt ist, in einem oder mehreren Schritten aufgemahlen beziehungsweise zermahlen wird.

10. Verfahren zum Aufbereiten von Verbrennungsprodukten nach einem oder mehreren der Ansprüche 7 bis 9,
**dadurch gekennzeichnet,**
**dass** das Gel oder getrocknete Gel, welches zudem gegebenenfalls zermahlen wurde, mit einer sauren Lösung weiter in einem und/oder in mehreren Schritten ausgewaschen wird, wobei jeweils eine Trennung der Waschlösung und der ausgewaschenen Rückstände des Gels erfolgt.

11. Verfahren zum Aufbereiten von Verbrennungsprodukten nach einem oder mehreren der Ansprüche 1 bis 10,
**dadurch gekennzeichnet,**
**dass** die ausgewaschenen Rückstände getrocknet und bei zwischen 250° C und 3000 °C ausgeglüht werden.

12. Verfahren zum Aufbereiten von Verbrennungsprodukten nach einem oder mehreren der Ansprüche 1 bis 11,
**dadurch gekennzeichnet,**
**dass** die Base und/oder die Verbrennungsprodukte jeweils bei einer Temperatur größer oder gleich 50 °C für eine Dauer von zwischen 0,1 Stunden und 4 Stunden getrocknet werden, bevor die Base und die Verbrennungsprodukte gemischt werden.

13. Verfahren zum Aufbereiten von Verbrennungsprodukten nach einem oder mehreren der Ansprüche 1 bis 12,
**dadurch gekennzeichnet,**
**dass** eine Trocknung bei einer Temperatur größer oder gleich 50 °C für eine Dauer von zwischen 0,1 Stunden und 4 Stunden des Gemischs der Verbrennungsprodukte und der Base vor dem Sintern erfolgt.

14. Verfahren zum Aufbereiten von Verbrennungsprodukten nach einem oder mehreren der Ansprüche 1 bis 13,
**dadurch gekennzeichnet,**
**dass** das gesinterte Gemisch der Verbrennungsprodukte und der Base, welches nach dem Sintern erhalten wird, vor dem Auswaschen mit einer Säurelösung in einem und/oder mehreren Schritten zermahlen wird.

## Claims

1. A method for reprocessing solid combustion products of coal,
**characterized in that**
the combustion products are first mixed with a base before the obtained mixture is sintered, wherein the sintered mixture is washed out with an acid solution after sintering, wherein a mineral base or a base comprising an element from the family of alkali metals and/or alkaline earth metals is used as the base, the used base in particular being potassium and/or sodium, wherein hydroxides or hydrogen sulfites, or carbonates of alkali metals and/or alkaline earth metals are used as the base, and wherein a mineral acid, especially nitric acid, hydrochloric acid or chloric acid (HClO₃), or respectively an aqueous solution of one of these acids, is used as the acid solution.

2. The method for reprocessing combustion products according to claim 1,
**characterized in that**
a base is added to the combustion products in a stoichiometric or hyperstoichiometric amount in relation to the concentration of silicon (Si) and/or silicon dioxide (SiO₂), wherein the ratio, and in particular a stoichiometric ratio, of the base to silicon (Si) and/or silicon dioxide (SiO₂) is greater than or equal to 1.

3. The method for reprocessing combustion products according to claim 1 or 2,
**characterized in that**
sintering occurs at a temperature of 100°C to 2000°C over a period of 0.1 hours to 4 hours.

4. The method for reprocessing combustion products according to one or more of claims 1 to 3,
**characterized in that**
the acid solution for washing out is added to the sintered mixture of the combustion products and the base, wherein the washing solution and washed-out residues of the sintered mixture of the combustion products and the base are then or simultaneously separated by filtration.

5. The method for reprocessing combustion products according to one or more of claims 1 to 4,
**characterized in that**
an acid solution or respectively the acid contained therein for washing out is added to the combustion products at a stoichiometric or hyperstoichiometric amount in relation to the concentration of oxides and/or especially the oxides that form the primary components of the combustion products, and/or silicon (Si) and/or silicon dioxide (SiO₂) and/or aluminum (Al) and/or aluminum oxide (Al₂O₃) and/or sodium (Na) and/or sodium oxide (Na₂O), wherein a ratio, especially a stoichiometric ratio, of acid to oxides and/or in particular to the oxides that represent the primary components of the combustion products, and/or to silicon (Si) and/or to silicon dioxide (SiO₂) and/or to aluminum (Al) and/or to aluminum oxide (Al₂O₃) and/or to sodium (Na) and/or sodium oxide (Na₂O) greater than or equal to 1 is used.

6. The method for reprocessing combustion products according to one or more of claims 1 to 5,
**characterized in that**
the acid solution for washing out is first added at room temperature to the sintered mixture of the combustion products and the base, and the mixture of the acid solution and sintered mixture of the combustion products and the base is then heated at a temperature between 25°C and 300°C still before the washing solution and washed out residues of the sintered mixture of the combustion products and the base are separated by filtration.

7. The method for reprocessing combustion products according to claim 6, **characterized in that** a gel is formed.

8. The method for reprocessing combustion products according to one or both of claims 6 and 7,
**characterized in that t**
the gel that is formed during washing out and can be considered a washed-out residue of the sintered mixture of the combustion products and the base is dried at a temperature between 20°C and 500°C after being separated from any possibly remaining part of the washing solution.

9. The method for reprocessing combustion products according to one or both of claims 7 and 8,
**characterized in that**
the gel or the dried gel, assuming that the gel was dried, is crushed or respectively ground in one or a plurality of steps.

10. The method for reprocessing combustion products according to one or more of claims 7 to 9,
**characterized in that**
the gel or the dried gel that may also have been ground is further washed out with an acid solution in one and/or a plurality of steps, wherein the washing solution and the washed out residues of the gel are separated.

11. The method for reprocessing combustion products according to one or more of claims 1 to 10,
**characterized in that**
the washed out residues are dried and annealed between 250°C and 3000 °C.

12. The method for reprocessing combustion products according to one or more of claims 1 to 11,
**characterized in that**
the base and/or the combustion products are each dried at a temperature greater than or equal to 50°C for a period of between 0.1 hours and 4 hours before the base and the combustion products are mixed.

13. The method for reprocessing combustion products according to one or more of claims 1 to 12,
**characterized in that**
the mixture of the combustion products and the base is dried at a temperature greater than or equal to 50°C for a period of between 0.1 hours and 4 hours before sintering.

14. The method for reprocessing combustion products according to one or more of claims 1 to 13,
**characterized in that**
the sintered mixture of the combustion products and the base that is obtained after sintering is ground in one and/or more steps before being washed out with an acid solution.

## Revendications

1. Un mode de traitement des produits solides de la combustion du charbon **caractérisé en ce que** suit: on mélange les produits de combustion avec la première base, ensuite on fritte le mélange obtenu; en cela, après le frittage on lave le mélange fritté par une solution d'acide, basée soit sur une base minérale soit sur une base, qui contient un élément du groupe alcalin métaux ou des métaux alcalino-terreux, en particulier, de potassium et/ou de sodium, soit en base du hydroxyde ou du hydrosulfite, soit en base des carbonates de métaux alcalins et/ou de métaux alcalino-terreux; en qualité de solution acide on utilise l'acide minéral, tel que l'acide nitrique, l'acide chlorhydrique ou l'acide chlorique (HClO₃), ou une solution aqueuse d'un de ces acides.

2. Un mode de traitement des produits de combustion selon la revendication 1, **caractérisé en ce qu'**on ajoute la base aux produits de combustion dans une quantité stoechiométrique ou surstoechiométrique par rapport à la teneur en silicium (Si) et/ou en dioxyde de silicium (SiO₂); en cela, la proportion stoechiométrique de la base et du silicium (Si) et/ou du dioxyde de silicium (SiO₂), fait plus ou est égale à 1.

3. Un mode de traitement des produits de combustion selon la revendication 1 ou 2, **caractérisé en ce qu'** on fritte à une température de 100°C à 2000°C pendant une période de 0,1 heure à 4 heures.

4. Un mode de traitement des produits de combustion selon une ou plusieurs des revendications 1-3, **caractérisé en ce que** pendant le lavage on ajoute la solution d'acide au mélange fritté de produits de combustion et à la base; ensuite ou simultanément on sépare par filtration la solution lessivée, les résidus du mélange fritté de produits de combustion et la base.

5. Un mode de traitement des produits de combustion selon une ou plusieurs des revendications 1-4, **caractérisé en ce que** pendant le lavage on ajoute la solution d'acide ou l'acide y contenu, dans une quantité stoechiométrique ou surstoechiométrique par rapport à la teneur en oxydes, en particulier des oxydes, qui constituent des composants principaux des produits de combustion et/ou du silicium (Si), et/ou du dioxyde de silicium (SiO₂) et/ou d'aluminium (Al), et/ou de l'oxyde d'aluminium (Al₂O₃), et/ou de sodium (Na), et/ou de l'oxyde de sodium (Na₂O); en cela, la proportion stoechiométrique des oxydes et des acides, notamment des oxydes, constituent des composants principaux des produits de combustion et/ou de silicium (Si), et/ou du dioxyde de silicium (SiO₂) et/ou d'aluminium (Al), et/ou de l'oxyde d'aluminium (Al₂O₃), et/ou de sodium (Na), et/ou de l'oxyde de sodium (Na₂O), fait plus ou est égale à 1.

6. Un mode de traitement des produits de combustion selon une ou plusieurs des revendications 1-5, **caractérisé en ce que**, dans le but du lavage, on ajoute à température ambiante, premièrement, la solution d'acide au mélange fritté des produits de combustion et à la base; ensuite on chauffe le mélange constitué de la solution d'acide et du mélange fritté des produits de combustion et d'une base, à une température de 25°C à 300°C, avant la séparation par filtration du liquide laveur et les résidus lessivés du mélange fritté des produits de combustion et de la base.

7. Un mode de traitement des produits de combustion selon la revendication 6, **caractérisé en ce qu'**on obtient à l'issue du gel.

8. Un mode de traitement des produits de combustion selon une ou les deux des revendications 6 et 7, **caractérisé en ce que** le gel formé à l'issue du lavage, qu'on peut considérée comme un résidu lavé du mélange fritté des produits de combustion et de la base, après sa séparation du liquide laveur, est séché à une température de 20°C à 500°C.

9. Un mode de traitement des produits de combustion selon une ou les deux des revendications 7 et 8, **caractérisé en ce qu'**on grince ou on pile, à une ou plusieurs étapes, le gel ou le gel séché, à condition du séchage du gel.

10. Un mode de traitement des produits de combustion selon une ou plusieurs des revendications 7-9, **caractérisé en ce que** le gel ou le gel séché, qui, en outre, n'était pas nécessairement grincé, est lavé supplémentairement avec une solution d'acide à une ou plusieurs étapes, en même temps, on sépare le liquide laveur et les résidus lavés du gel,

11. Un mode de traitement des produits de combustion selon une ou plusieurs des revendications 1-10, **caractérisé en ce qu'**on sèche et on calcine les résidus lavés à une température de 250°C à 3000°C.

12. Un mode de traitement des produits de combustion selon une ou plusieurs des revendications 1-11, **caractérisé en ce qu'**on sèche la base et/ou les produits de combustion avant leur mélange, respectivement, à une température plus ou égale à 50°C, pendant une période de temps de 0,1 heure à 4 heures.

13. Un mode de traitement des produits de combustion selon une ou plusieurs des revendications 1-12, **caractérisé en ce que**, avant le frittage, on sèche le mélange des produits de combustion et de la base, à une température plus ou égale à 50°C, pendant une période de temps de 0,1 heure à 4 heures.

14. Un mode de traitement des produits de combustion selon une ou plusieurs des revendications 1-13, **caractérisé en ce que**, avant le lavage par une solution d'acide, on grince le mélange fritté des produits de combustion et la base obtenue après le frittage, à une ou plusieurs étapes.
